# EUROPÄISCHE PATENTSCHRIFT

(11) **EP 1 304 452 B1**
(45) Veröffentlichungstag und Bekanntmachung des Hinweises auf die Patenterteilung: **19.08.2009**
(21) Anmeldenummer: 02015301.1
(22) Anmeldetag: 10.07.2002
(51) Int. Cl.: F01M 11/08

(54) **Schmierölkreislauf für die Verbrennungskraftmaschine eines Fahrzeugs**
Lubricant circuit for a vehicle combustion engine
Circuit de lubrification d'un moteur à combustion d'un vehicule

(30) Priorität: 18.10.2001 DE 10151602
(43) Veröffentlichungstag der Anmeldung: 23.04.2003
(73) Patentinhaber: DR. SCHRICK GMBH, 42899 Remscheid (DE)
(72) Erfinder: Schrick, Peter, Dr. Ing., 42899 Remscheid (DE); Hanula, Barna, Dr. Ing., 42399 Wuppertal-Beyenburg (DE); Wildemann, Roger, 42929 Wermelskirchen (DE)
(74) Vertreter: Sobisch, Peter

(56) Entgegenhaltungen:
- EP-A- 0 709 553
- WO-A-02/20954
- GB-A- 2 084 266
- JP-A- 9 209 737
- US-A- 2 878 889
- US-A- 3 978 671
- US-A- 4 681 189
- US-A- 4 878 924
- US-A- 6 053 137

## Beschreibung

Die Erfindung bezieht sich auf einen Schmierölkreislauf entsprechend dem Oberbegriff des Anspruchs 1.

Das Schmiersystem von bei Fahrzeugen eingesetzten Verbrennungskraftmaschinen besteht im Regelfall aus einem Schmierölkreislauf, der ausgehend von einer, mit dem Motorblock in Verbindung stehenden Ölwanne über eine Ölpumpe und einen Filter zurück zu dem Motorblock führt, innerhalb welchem ein Leitungssystem zur Verzweigung des Ölstromes auf die Motorkomponenten vorgesehen ist, die in Wechselwirkung mit dem Schmieröl treten sollen. Lediglich optional kann in dem Kreislauf auch ein Ölkühler vorgesehen sein. Das Schmieröl entfaltet hierbei neben einer Schmierwirkung vor allen Dingen auch eine Kühlwirkung. In dem Dokument EP 0 166 698 A2 ist der grundsätzliche Aufbau eines solchen Schmierölkreislaufs beschrieben.

Es ist bekannt, dass es bei starken Horizontalbeschleunigungen des Fahrzeugs oder auch bei extremen Schräglagen, so wie dies beispielsweise bei Flugzeugen oder auch bei Geländefahrzeugen der Fall ist, unter anderem drehzahlabhängig zu einem Ansaugen von Luft im Bereich der Ölwanne kommen kann, so dass - falls keine besonderen Maßnahmen getroffen werden - in dem Schmierölkreislauf ein Gemisch aus Öl und in diesem freier, d. h. ungelöster Luft geführt wird. Lediglich der Vollständigkeit halber sei darauf hingewiesen, dass - und zwar druckabhängig - in dem Schmieröl stets ein Anteil an gelöster Luft vorhanden ist, der - wiederum druckabhängig - als freie Luft ausgeschieden werden kann.

Freie, d. h. in dispergierter Form vorliegende Luft gelangt nicht nur infolge des Ansaugens in der Ölwanne in den Ölkreislauf. Durch schnell bewegte Maschinenteile, insbesondere durch die Vermischung von aus Lagern abgeschleuderten Öltröpfchen mit Luftströmen kommt es zu einem beträchtlichen Einbringen von Luftanteilen in den resultierenden Ölstrom. Entsprechend den entlang des Ölkreislaufs unterschiedlichen Druckverhältnissen treten diese Luftanteile in unterschiedlichen Mengenverhältnissen als freie oder gelöste Anteile auf. So ist beispielsweise bei der infolge des Druckregelventils gegebenen Entspannung im Anschluss an dieses, nämlich in der zur Ölwanne führenden Rückführleitung bei unverändertem absolutem Gehalt an Luft mit einer Zunahme des Anteils an freier Luft zu rechnen.

Bei mehreren Umläufen des Öls innerhalb des Ölkreislaufs kann es auf diesem Wege zu einer Zunahme des absoluten Gehalts an mitgeführter Luft kommen.

In Abhängigkeit von dem Gehalt an freier Luft kann es bekanntermaßen zu beträchtlichen Veränderungen des Betriebsverhaltens des Schmieröls kommen, insbesondere zu einer Verminderung des Wärmeleitvermögens, der Kühlwirkung und der Schmierfähigkeit sowie zu einer unerwünschten Kompressibilität. Darüber hinaus kommt es zu infolge von Kompressionen des Luftanteils im Verlauf des Schmierölkreislaufs auch zu zusätzlicher Erwärmung, hierdurch bedingter Verminderung der Viskosität und so weiter. Schädlich für das Betriebsverhalten des Öls ist so mit in erster Linie der Gehalt an freier Luft.

Dieses Problem des Einbringens von Luft bzw. einer Aeration ist bei Flugmotoren bzw. Motoren von Geländefahrzeugen bisher dadurch behoben worden, dass in den Schmierölkreislauf beispielsweise eine mit dem Motor in Antriebsverbindung stehende Zentrifuge eingebaut wurde, über die eine Zerlegung des Gemisches in eine luftärmere und eine luftreichere Fraktion erreicht wurde und wobei weiter in Verbindung mit einem Öltank, der funktionell zwischen einer Ölpumpe einerseits und der Zentrifuge andererseits angeordnet war, eine Entlüftung des Gemisches erreicht wurde, wobei die auf diesem Wege abgetrennte Luft in die Umgebung abgeführt wurde. Dem Motor, und zwar beispielsweise einem jeden Zylinder können weitere Pumpen zur Ölabsaugung zugeordnet sein, die nach Maßgabe des Betriebszustands des Fahrzeugs ein Öl-Luftgemisch der Zentrifuge zuführen. Es können auch Gruppen von Zylindern sein, denen jeweils eine Saugpumpe zugeordnet ist. So sind bei üblichen Motoren zwei Saugpumpen vorgesehen, während bei Kleinmotoren, z.B. Zweizylinder-Motoren eine Saugpumpe ausreichend ist. Über ein, beispielsweise zwischen einem Filter und dem Öltank angeordnetes Druckregelventil wird der Druck des Schmierölkreislaufs auf einem einstellbaren Niveau gehalten. Alternativ zu dieser Ausführung kann die Zentrifuge auch durch einen Zyklon ersetzt werden, der funktionell zwischen den Saugpumpen des Motors und dem Öltank angeordnet ist. In jedem Fall findet somit eine Luftabscheidung vor der eigentlichen Ölpumpe statt.

Diese bekannten Systeme zur Behandlung des Aerationsproblems sind aufgrund ihrer Komplexität für den Einsatz bei Serienmotoren beispielsweise von Pkws ungeeignet und insbesondere zu kostenträchtig.

In Abhängigkeit von zunehmenden Horizontalbeschleunigungen auch bei Serien-PKW sowie dem vorgegebenen Zwang zu flacheren Ölwannen stellt sich das Aerationsproblem zwischenzeitlich jedoch auch bei Serienmotoren. Eine dem Oberbegriff des Anspruchs 1 entsprechender Schmierölkreislauf, bei dem In einem, einer Ölpumpe unmittelbar nachgeordneten Zyklon eine Zerlegung eines Ölstromes in eine luftreichere und eine luftärmere Fraktion stattfindet, wobei die luftärmere Fraktion Schmierungszwecken und die luftreichere Fraktion der Ölwanne des Motors zugeführt werden, ist aus dem Dokument US-A-4 878 924 allgemein bekannt.

Es ist vor diesem Hintergrund die Aufgabe der Erfindung, einen Schmierölkreislauf der eingangs bezeichneten Art bei einfachem konstruktivem Aufbau auf eine verbesserte Abtrennung von Luft hin auszugestalten, so dass eine Behebung des Aerationsproblems auch für Serienmotoren in wirtschaftlich vertretbarer Weise möglich ist. Gelöst ist diese Aufgabe bei einem solchen Schmierölkreislauf durch die Merkmale des Kennzeichnungsteils des Anspruchs 1.

Innerhalb der Kreislaufführung ist zumindest ein Mittel zur Zerlegung des Ölstromes in wenigstens zwei Fraktionen vorgesehen, nämlich eine luftärmere und eine luftreichere Fraktion, wobei die luftreichere Fraktion über die Rückführleitung zu der Ölwanne zurückgeführt wird. Dieses, für Serienmotoren bestimmte Konzept, bei dem auf einen Öltank bewusst verzichtet wird, lässt bereits erkennen, dass ein minimaler Aufwand zur Implementierung bei einem standardmäßigen Schmierölkreislauf erforderlich ist. So wird von der ohnehin vorhandenen Rückführleitung und einem Druckregelventil Gebrauch gemacht. Angestrebt wird in jedem Fall eine Abtrennung zumindest einer luftreicheren Fraktion aus dem Ölstrom, die in die Ölwanne zurückgeführt wird. Für Schmierungszwecke steht somit eine luftärmere Fraktion zur Verfügung, so dass Schmierungs- und insbesondere Kühlverhältnisse sowie sonstige Funktionen des Ölstroms nicht durch Lufteinschlüsse beeinträchtigt werden. Aufgrund des genannten minimalen Aufwandes ist eine derartige Lösung auch ohne nennenswerten Mehraufwand bei Serienmotoren realisierbar, bei denen dem in Anbetracht zunehmender Horizontalbeschleunigungen, jedoch auch des Zwanges zu flacher ausfallenden Einbauräumen und damit flacheren Ölwannen verstärkt einhergehenden Aerationsproblem somit besser Rechnung getragen werden kann. Das Mittel zur Zerlegung des Ölstromes wird durch eine Zentrifuge gebildet, welche in Anbetracht der druckabhängigen Löslichkeit von Luft in Öl an solchen Stellen der Kreislaufführung vorgesehen ist, die durch einen im Vergleich zum Lieferdruck der Ölpumpe niedrigen Druck charakterisiert sind. Denn an diesen Stellen erhöht sich zwangsläufig der Anteil an ungelöster, feindispergierter Luft innerhalb des Ölstromes, der im Gegensatz zu dem gelösten Anteil durch die erfindungsgemäß eingesetzten Mittel abtrennbar ist. Die Druckabhängigkeit der Löslichkeit der Luft ist bei der erfindungsgemäßen Anordnung des Mittels zur Zerlegung des Ölstroms somit berücksichtigt und es befindet sich die Zentrifuge an einer Stelle jenseits des Druckregelventils, dessen Drosselwirkung ein Ausfallen gelöster Luft zur Folge hat, welche anschließend abgetrennt wird. Sowohl die luftreichere als auch die luftärmere Fraktion werden der Ölwanne zugeführt, wobei die luftreichere Fraktion in den Raum oberhalb des Ölbades und die luftärmere Fraktion unmittelbar in das Ölbad eingeführt wird. Aus dem Bereich der Ölwanne wird die abgetrennte Luft in geeigneter Weise abgeführt.

Gemäß den Merkmalen der Ansprüche 2 bis 4 kann die Zentrifuge unmittelbar mit dem Motor in mechanischer Antriebsverbindung stehen, d.h. entweder über eine Welle oder ein zwischengeordnetes Getriebe. In Betracht kommt jedoch auch ein rein hydraulischer Antrieb unmittelbar durch den Ölstrom, beispielsweise unter Zwischenanordnung einer Turbine oder ein separater elektrischer Antrieb, der besonders einfache Regelungsmöglichkeiten eröffnet.

Gemäß den Merkmalen des Anspruchs 5 bildet das Mittel zur Abtrennung eines Teilstromes mit dem Druckregelventil eine Baueinheit. Insbesondere durch diese Maßnahme kommt besonders deutlich zum Ausdruck, dass die Implementierung der erfindungsgemäßen technischen Lehre bei einem standardmäßigen Schmierölkreislauf faktisch beispielsweise auf das Ersetzen einer im erfindungsgemäßen Sinne modifizierten Ölpumpe beschränkt sein kann, nachdem im Übrigen unverändert von den Eigenschaften des Schmierölkreislaufs Gebrauch gemacht wird.

Entsprechend den Merkmalen des Anspruchs 6 sind die Öffnungscharakteristik des Druckregelventils, die Trennwirkung des eingesetzten Mittels zur Zerlegung des Ölstromes und die mit zunehmender Motordrehzahl verstärkt auftretende Aeration quantitativ aufeinander abgestimmt. Kommt es somit infolge einer erhöhten Motordrehzahl zu einem verstärkten Einbringen an ungelöster Luft in den Ölstrom, führt dies zu einer quantitativ verstärkten Trennwirkung des eingesetzten Mittels, so dass es unabhängig von dem verstärkten Lufteinbringen in den Ölstrom infolge eines diesem entsprechend verstärkten Ausscheidens von Luft über den relativ luftärmeren Teilstrom dennoch zu einer Ausbildung gleich bleibender stabiler Schmier- und Kühlverhältnisse kommt.

Nachdem an Stellen niedrigeren Druckes der Kreislaufführung bei unverändertem Gesamtluftgehalt des Ölstromes der Anteil an ungelöste Luft im Vergleich zu Bereichen höheren Druckes der Kreislaufführung zunimmt, kann auf diesem Wege die Abtrennung insbesondere der für den Motorbetrieb schädlichen ungelösten Luft quantitativ weiter verbessert werden.

In jedem Fall wird erfindungsgemäß nur eine Ölpumpe eingesetzt und in Abweichung von der bekannten Lösung beispielsweise bei Flugmotoren auf einen Öltank verzichtet.

Die Erfindung wird im Folgenden unter Bezugnahme auf die in den Zeichnungen schematisch wiedergegebenen Ausführungsbeispiele näher erläutert werden. Es zeigen:
Fig. 1 eine Darstellung eines dem Stand der Technik zuzuordnenden Schaltschemas eines Schmierölkreislaufs eines Serienmotors;
Fig. 2 ein erstes Ausführungsbeispiel eines erfindungsgemäßen Schmierölkreislaufs;
Fig. 3 ein zweites Ausführungsbeispiel eines erfindungsgemäßen Schmierölkreislaufs;
Fig. 4 ein drittes Ausführungsbeispiel eines erfindungsgemäßen Schmierölkreislaufs;
Fig. 5 ein viertes Ausführungsbeispiel eines erfindungsgemäßen Schmierölkreislaufs;

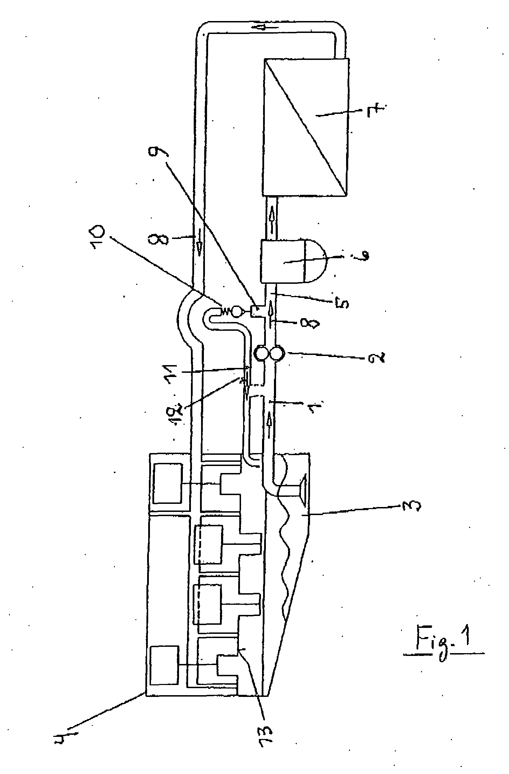

Es wird im Folgenden zunächst auf die Zeichnungsfigur gemäß Fig. 1 Bezug genommen, welche ein dem Stand der Technik zuzuordnendes Schaltschema eines bei einem PKW-Serienmotor eingesetzten Schmierölkreislaufs zeigt.

Mit 1 ist die Ansaugleitung einer Ölpumpe 2 bezeichnet, deren Ansaugmündung sich innerhalb der Ölwanne 3 eines Motorblocks 4, und zwar innerhalb des Ölbades befindet. Die druckseitige Leitung 5 der Ölpumpe 2 führt nacheinander über einen Filter 6 und einen Kühler 7 zurück zu dem Motorblock 4, so dass sich innerhalb dieses Kreislaufs eine Schmierölströmung global in Richtung der Pfeile 8 ergibt.

Zwischen der Ölpumpe 2 und dem Filter 6 befindet sich ein Abzweig 9, an den ein Druckregelventil 10 angeschlossen ist, über welches im Fall des Ansprechens über eine Rückführleitung 11 Öl in Richtung des Pfeiles 12 in die Ölwanne 3 zurückführbar ist.

Die Ölpumpe 2 steht in an sich bekannter, zeichnerisch nicht dargestellter Weise in Antriebsverbindung mit dem Motor, dessen Kurbelwelle 13 schematisch angedeutet ist. Bei einem derartigen Schmierölkreislauf kann es - bedingt durch die absolute Höhe der Ölwanne 3 bzw. des innerhalb dieser anstehenden Ölpegels bei starken horizontalen Beschleunigungen, Schräglagen und/oder hohen Drehzahlen der Ölpumpe zu einem teilweisen Ansaugen von Luft kommen, so dass in dem, durch die Ansaugleitung 1 und die Leitung 5 gebildeten Schmierölkreislauf ein mit Luft befrachteter Ölstrom geführt ist, somit ein Ölstrom, in dem Luft in fein verteilter Form dispergiert ist. Dieses Problem der Aeration ist nicht nur durch den Ansaugvorgang der Ölpumpe bedingt. Hierzu trägt auch die Zerstäubung von beispielsweise den Kurbelwellenlagern abgespritztem Öl durch bewegliche Motorteile bei, wobei dieser Effekt mit steigender Drehzahl zunimmt. Je nach dem Luftanteil des Schmieröls hat dieses neben einer verminderten Schmierfähigkeit insbesondere eine stark verminderte Wärmeleitfähigkeit zur Folge, so dass es zu beträchtlichen Folgeschäden infolge örtlicher Überhitzung von geschmierten Motorkomponenten kommen kann. Schäden können auch infolge einer durch Luftanteile bedingten Kompressibilität des Schmieröls entstehen, da für hydraulische Funktionselemente wie z.B. den Ventilspielausgleich oder die Nockenwellenverstellung inkompressible Medien benötigt werden.

Das Ziel der vorliegenden Erfindung besteht nunmehr darin, in konstruktiv mög lichst einfacher Weise in den Schmierölkreislauf eingeführte Luftanteile wieder zu entfernen oder ein Einbringen von Luftanteilen in den Schmierölkreislauf zu unterdrücken.

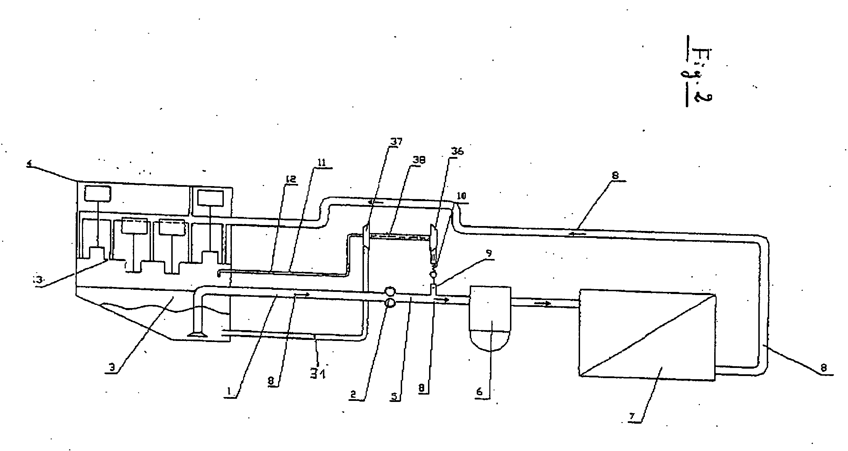

Fig. 2 zeigt einen erfindungsgemäßen Schmierölkreislauf, wobei Maßnahmen zur Zerlegung des Ölstromes in eine luftreichere und luftärmere Fraktion in dem Rückführzweig jenseits des Druckregelventils 10 vorgesehen sind. Dies bedeutet, dass der über das Druckregelventil 10 im Fall dessen Ansprechens geführte Ölstrom unmittelbar eine Turbine 36 antreibt, die über eine Welle 38 mit einer Zentrifuge 37 gekoppelt ist, wobei über eine Rückführleitung 31 eine luftärmere Fraktion und eine Rückführleitung 11 eine luftreichere Fraktion geführt ist. Die Welle 38 befindet sich hierbei innerhalb einer Leitung, welche von dem über die Turbine 36 geführten Gemisch durchströmt wird und welches innerhalb der Zentrifuge 37 somit in zwei Fraktionen zerlegt wird.

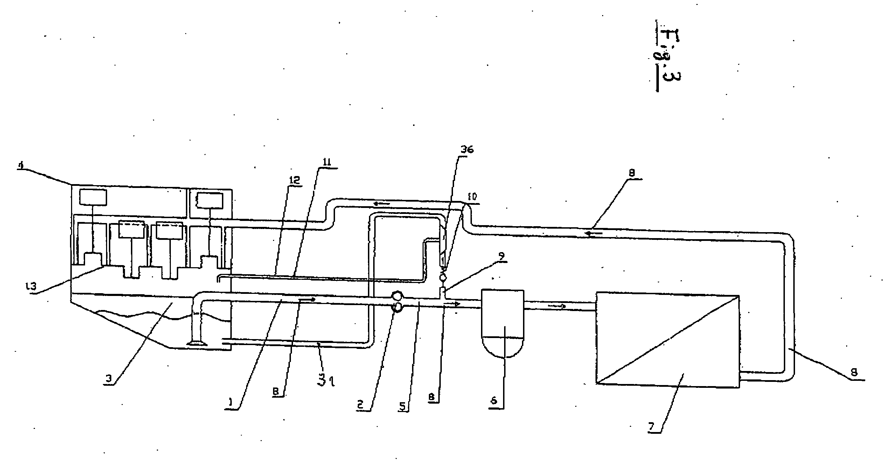

In dem Schaltkreis gemäß Fig. 3 ist eine Zentrifuge 36 gezeigt, die in zeichnerisch nicht dargestellter Weise angetrieben wird und die wiederum dem Druckregelventil 10 nachgeordnet ist. Ausgangsseitig an die Zentrifuge 36 angeschlossene Rückführleitungen 11, 31 dienen wiederum der Rückführung luftreicherer bzw. luftärmerer Fraktionen des über das Druckregelventil 10 geführten Gemischstromes, und zwar wie bei dem vorstehenden Ausführungsbeispiel nach Maßgabe ihres Luftgehalts unmittelbar in das Ölbad oder in den Raum des Ölbades in der Ölwanne 3.

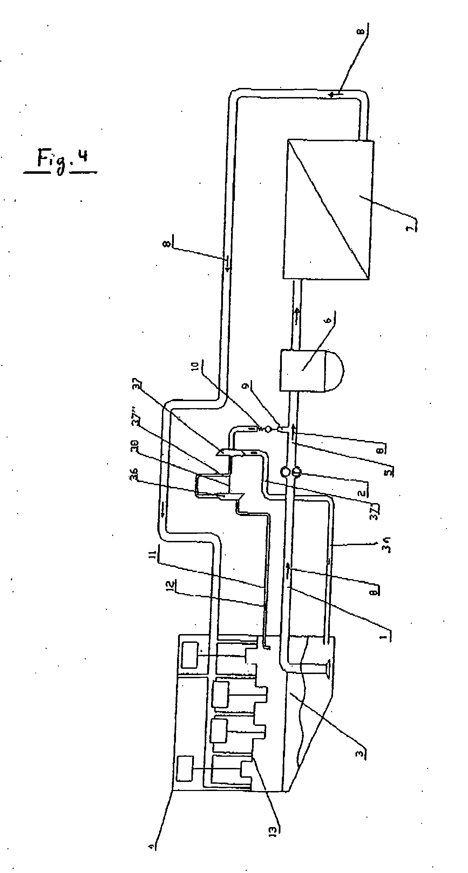

Fig. 4 zeigt einen Schmierölkreislauf, bei dem der über das Druckregelventil 10 geführte Gemischstrom eine Zentrifuge 37 durchströmt, in der eine luftärmere Fraktion radial außenseitig abgetrennt und über die Rückführleitung 31 der Ölwanne 3 unmittelbar zugeführt wird. Die luftreichere Fraktion ist über eine Rückführleitung 37" zum Antrieb einer Turbine 36 eingesetzt, die über eine Welle 38 mit der Zentrifuge 37 gekoppelt ist. Zum Antrieb der Zentrifuge wird somit lediglich ein Nebenstrom benutzt. Ausgangsseitig steht die Turbine 36 über die Rückführleitung 11 mit dem Raum oberhalb des Ölbades der Ölwanne 3 in Verbindung.

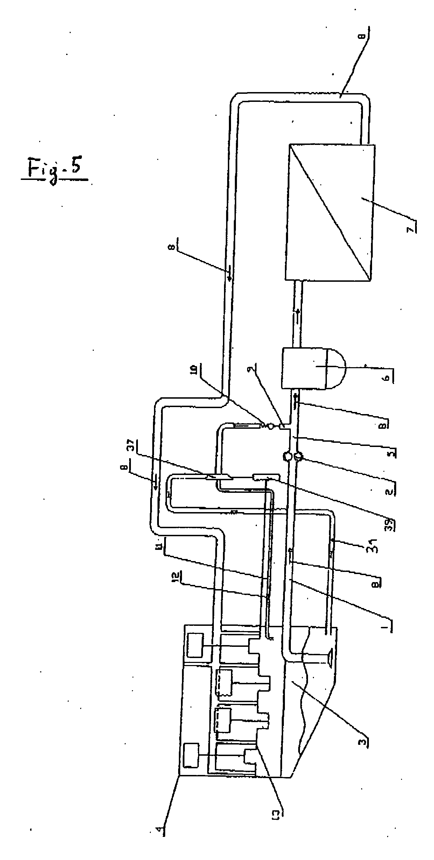

Bei dem in Fig. 5 gezeigten Konzept wird wiederum der in einem Rückführzweig jenseits des Druckregelventils 10 befindliche Gemischstrom in zwei Fraktionen zerlegt, die anschließend über Rückführfeitungen 11, 31 der Ölwanne 3 zugeführt werden, wobei über die Rückführleitung 31 die luftärmere Fraktion und über die Rückführleitung 11 die luftreichere Fraktion geführt ist. Die Zentrifuge 37 steht mit dem Motor über ein Getriebe 39 in Antriebsverbindung.

Bei den vorstehend beschriebenen Ausführungsbeispielen wird erfindungsgemäß eine Luftabscheidung aus dem über das Druckregelventil geführten, sich somit unter einem geringeren Druck befindlichen ölstrom erreicht. Diese Art der Luftabscheidung wird wirksam, sobald das Druckregelventil sich im Öffnungszustand befindet und über die dargestellten Rückführleitungen ein Ölstrom geführt ist.

## Patentansprüche

1. Schmierölkreislauf für die Verbrennungskraftmaschine eines Fahrzeugs, der zumindest einen Motorblock, eine Ölwanne (3), eine Ölpumpe (2,14,20) und einen Filter (6) umfasst, wobei das Druckniveau innerhalb der Kreislaufführung mittels eines Druckregelventils (10) einstellbar ist, das über eine Rückführleitung (11) mit der Ölwanne (3) in Verbindung steht, und wobei die Kreislaufführung mit einer, in die Ölwanne (3) hineinragenden Ansaugleitung (1) versehen ist, wobei innerhalb der Kreislaufführung wenigstens ein Mittel zur Zerlegung des Ölstromes zumindest in eine luftreichere Fraktion und eine luftärmere Fraktion vorgesehen ist und wobei die luftreichere Fraktion über die Rückführleitung (11) in die Ölwanne (3) zurückführbar ist, **dadurch gekennzeichnet, dass** das Mittel zur Zerlegung des Ölstroms eine Zentrifuge (37) ist, wobei diese in der sich an das Druckregelventil (10) ausschließenden Rückfünrleitung (11,31) angeordnet ist.

2. Schmierölkreislauf nach Anspruch 1, **dadurch gekennzeichnet, dass** die Zentrifuge (37) unmittelbar mit dem Motor in Antriebsverbindung steht.

3. Schmierölkreislauf nach Anspruch 1, **dadurch gekennzeichnet, dass** die Zentrifuge (37) hydraulisch mittels des Ölstromes antreibbar ist.

4. Schmierölkreislauf nach Anspruch 1, **dadurch gekennzeichnet, dass** der Zentrifuge (37) ein elektrischer Antrieb zugeordnet ist.

5. Schmierölkreislauf nach einem der Ansprüche 1 bis 4, **dadurch gekennzeichnet, dass** das Druckregelventil (10) mit dem Mittel zur Zerlegung des Ölstromes eine Baueinheit bildet.

6. Schmierölkreislauf nach einem der Ansprüche 1 bis 5, **dadurch gekennzeichnet, dass** die Öffnungscharakteristik des Druckregelventils (11) in Verbindung mit dessen Anordnung nach Maßgabe des von der Motordrehzahl abhängigen Einbringens von Luft in den Ölstrom dahingehend angelegt ist, dass mit zunehmender Motordrehzahl eine zunehmende Öffnung des Druckregelventils (11) und Rückführung einer luftreicheren Fraktion des Ölstroms in die Ölwanne (3) gegeben ist.

7. Schmierölkreislauf nach einem der Ansprüche 1 bis 6, **dadurch gekennzeichnet, dass** im Anschluss an das genannte Mittel eine luftreichere Fraktion über die Rückführleitung (11) in den Raum oberhalb des Ölbades der Ölwanne (3) und eine luftärmere Fraktion über die Rückführleitung (31) unmittelbar in das Ölbad eingeführt ist.

## Claims

1. Lubrication oil circuit for the internal combustion engine of a vehicle, which comprises at least one engine block, an oil sump (3), an oil pump (2, 14, 20) and a filter (6), wherein the pressure level within the circuit can be adjusted by means of a pressure regulating valve (10) which is connected to the oil sump (3) via a return line (11), and wherein the circuit is provided with an intake line (1) protruding into the oil sump (3), wherein within the circuit at least one means is provided for breaking down the oil flow at least into an air-richer fraction and an air-leaner fraction and wherein the air-richer fraction can be returned to the oil sump (3) via the return line (11), **characterised in that** the means for breaking down the oil flow is a centrifuge (37), wherein this is disposed in the return line (11, 31) which is connected to the pressure regulating valve (10).

2. Lubrication oil circuit as claimed in claim 1, **characterised in that** the centrifuge (37) is in direct driving connection with the engine.

3. Lubrication oil circuit as claimed in claim 1, **characterised in that** the centrifuge (37) can be driven hydraulically by means of the oil flow.

4. Lubrication oil circuit as claimed in claim 1, **characterised in that** the centrifuge (37) is allocated an electric drive.

5. Lubrication oil circuit as claimed in any one of claims 1 to 4, **characterised in that** the pressure regulating valve (10) forms a structural unit with the means for breaking down the oil flow.

6. Lubrication oil circuit as claimed in any one of claims 1 to 5, **characterised in that** the opening characteristic of the pressure regulating value (11) [sic] in connection with its arrangement according to the engine speed-dependent introduction of air into the oil flow are arranged to the effect that increasing engine speed is associated with increased opening of the pressure regulating valve (11) and return of an air-richer fraction of the oil flow into the oil sump (3).

7. Lubrication oil circuit as claimed in claims 1 to 6, **characterised in that** subsequent to the said means, an air-richer fraction is introduced via the return line (11) into the chamber above the oil bath of the oil sump (3) and an air-leaner fraction is introduced via the return line (31) directly into the oil bath.

## Revendications

1. Circuit d'huile de lubrification pour le moteur à combustion interne d'un véhicule, qui comporte au moins un bloc moteur, un carter à huile (3), une pompe à huile (2, 14, 20) et un filtre (6), le niveau de pression étant apte à être réglé à l'intérieur du circuit au moyen d'une vanne de réglage de la pression (10), qui communique avec le carter à huile (3) via une conduite de retour (11), et le circuit étant muni d'une conduite d'aspiration (1) engagée dans le carter à huile (3), au moins un moyen de décomposition du flux d'huile étant prévu dans le circuit en vue de séparer le flux d'huile en une fraction plus riche en air et une fraction plus pauvre en air, et la fraction plus riche en air étant apte à être renvoyée via la conduite de retour (11) dans le carter à huile (3), **caractérisé en ce que** le moyen de décomposition du flux d'huile est une centrifugeuse (37), celle-ci étant montée dans la conduite de retour (11, 31) non raccordée à la vanne de réglage de la pression (10).

2. Circuit d'huile de lubrification selon la revendication 1, **caractérisé en ce que** la centrifugeuse (37) est directement reliée en entraînement avec le moteur.

3. Circuit d'huile de lubrification selon la revendication 1, **caractérisé en ce que** la centrifugeuse (37) est apte à être actionnée par voie hydraulique par le flux d'huile.

4. Circuit d'huile de lubrification selon la revendication 1, **caractérisé en ce qu'**un système d'entraînement électrique est associé à la centrifugeuse (37).

5. Circuit d'huile de lubrification selon l'une quelconque des revendications 1 à 4, **caractérisé en ce que** la vanne de réglage de la pression (10) forme une unité de construction avec le moyen de décomposition du flux d'huile.

6. Circuit d'huile de lubrification selon l'une quelconque des revendications 1 à 5, **caractérisé en ce que** la caractéristique d'ouverture de la vanne de réglage de la pression (11) est conçue en liaison avec la disposition de celle-ci conformément à l'introduction d'air dans le flux d'huile en fonction de la vitesse de rotation du moteur, de telle sorte que l'augmentation de la vitesse de rotation du moteur entraîne une augmentation de l'ouverture de la vanne de réglage de la pression (11) et le retour dans le carter à huile (3) d'une fraction plus riche en air du flux d'huile.

7. Circuit d'huile de lubrification selon l'une quelconque des revendications 1 à 6, **caractérisé en ce que**, à la suite du moyen mentionné, une fraction plus riche en air est introduite via la conduite de retour (11) dans l'espace au-dessus du bain d'huile du carter à huile (3) et une fraction plus pauvre en air est introduite via la conduite de retour (31) directement dans le bain d'huile.
